# EUROPÄISCHE PATENTSCHRIFT

(11) **EP 1 500 589 B1**
(45) Veröffentlichungstag und Bekanntmachung des Hinweises auf die Patenterteilung: **13.09.2006**
(21) Anmeldenummer: 03016788.6
(22) Anmeldetag: 23.07.2003
(51) Int. Cl.: B64D 13/00, F24F 13/065

(54) **Luftauslassvorrichtung für den Innenraum eines Fahrzeuges**
Air outlet device for a vehicle
Dispositif de sortie d'air pour véhicules

(43) Veröffentlichungstag der Anmeldung: 26.01.2005
(73) Patentinhaber: Goodrich Lighting Systems GmbH, 59557 Lippstadt (DE)
(72) Erfinder: Thomassin, Stefan, 59555 Lippstadt (DE); Harasta, Stefan, 33106 Paderborn (DE); Schrewe, Elmar, 59609 Anröchte-Uelde (DE)
(74) Vertreter: von Kreisler Selting Werner

(56) Entgegenhaltungen:
- DE-U- 1 892 765
- US-A- 5 127 876

## Beschreibung

Die Erfindung betrifft eine Luftauslassvorrichtung für den Innenraum eines Fahrzeuges und insbesondere zur Anordnung oberhalb eines Sitzplatzes eines Fahrzeuges, bei dem es sich beispielsweise um ein Flugzeug, Bus oder ein anderes Massenverkehrsmittel handelt.

Zur Zufuhr von Luft sind in Fahrzeuginnenräumen diverse Luftauslassvorrichtungen bekannt. Oberhalb von Sitzplätzen in beispielsweise Flugzeugen oder Bussen befinden sich einstellbare Luftauslassdüsen, die in einem kugelförmigen Halteelement schwenkbar gelagert sind. Eine derartige Luftauslassvorrichtung ist beispielsweise in US-A-5 399 119 beschrieben. Bei diesem bekannten Luftauslass wird ein Verschlusselement bei Drehung eines Betätigungselements axial verschoben, so dass eine ringförmige Luftauslassöffnung in ihrem Querschnitt veränderbar ist.

Eine weitere bekannte Luftauslassvorrichtung weist einen Luftauslasskanal auf, in dem nach Art einer Drosselklappe eine verschwenkbare Klappe drehbar gelagert ist. Durch Drehen eines kragenförmigen Betätigungselements, das an der Luftauslassöffnung angeordnet ist und über das die Klappe verschwenkbar ist, lässt sich die Intensität des Luftstromes beeinflussen. Bei schräg gestellter Klappe entsteht eine ungewollte Luftstrom-Ablenkung.

Beiden zuvor genannten Konstruktionen gemeinsam ist, dass auch bei vollständig geöffneter Luftauslassvorrichtung der Luftauslasskanal durch in diesem eingebaute Verschlusselemente beträchtlich in seinem Gesamtquerschnitt eingeschränkt ist. Um im vollständig geöffneten Zustand eine geforderte Mindestluftmenge austragen zu können, ist es daher erforderlich, den eigentlichen Luftauslasskanal bzw. die eigentliche Luftauslassöffnung zu vergrößern. Dies ist teilweise ästhetisch weniger ansprechend und erfordert erhöhten Einbauplatzbedarf, was beides unerwünscht ist.

Aus DE-B-1 218 892 ist ein weiteres Design einer Luftauslassvorrichtung bekannt, die einen axial verschiebbaren Luftauslassstutzen aufweist. Dieser Luftauslassstutzen arbeitet mit radialen Lufteinlassöffnungen zusammen und wirkt nach Art eines Schiebers, der durch axiale Bewegung verschiedene Lufteinlassöffnungen verschließt bzw. freigibt, wodurch entweder lediglich durch den Auslassstutzen hindurch oder außerhalb des Auslassstutzens oder sowohl durch den Auslassstutzen als auch außerhalb des Auslassstutzens Luft ausgelassen werden kann.

Aus DE-U 1 892 765 ist eine Luftdüse mit den Merkmalen des Oberbegriffs des Anspruchs 1 bekannt. Hierbei weist das Luftauslasselement einen zylindrischen Mantel auf, in dem die mindestens eine Luftauslassöffnung ausgebildet ist.

Eine Aufgabe der Erfindung ist es, eine Luftauslassvorrichtung zu schaffen, die bei möglichst geringem Luftauslassöffnungsquerschnitt dennoch eine ausreichende Menge an Luft ausgeben kann. Ferner soll der Aufbau dieser Luftauslassvorrichtung konstruktiv einfach gestaltet sein. Schließlich muss das Design so gewählt werden, dass die Entstehung störender Strömungsgeräusche unterbunden wird.

Zur Lösung dieser Aufgabe wird mit der Erfindung eine Luftauslassvorrichtung für den Innenraum eines Fahrzeuges, insbesondere zur Anordnung oberhalb eines Sitzplatzes eines Fahrzeuges wie beispielsweise Flugzeug, Bus o.dgl. vorgeschlagen, wobei die Luftauslassvorrichtung versehen ist mit den Merkmalen des Anspruchs 1. Die Unteransprüche betreffen einzelne Ausgestaltungen der Erfindung.

Die erfindungsgemäße Luftauslassvorrichtung weist ein Luftauslasselement auf, das mindestens eine Lufteinlassöffnung für die Zufuhr von Luft und eine Luftauslassöffnung für den Auslass der zugeführten Luft aufweist. In diesem Luftauslasselement befindet sich ein drehbares Schieberelement, das um die Längsachse des Luftauslasselements drehbar gelagert ist und dem Verschließen bzw. Freigeben der mindestens einen Lufteinlassöffnung dient. An der Luftauslassöffnung des Luftauslasselements ist ein Betätigungselement angeordnet, dass nach Art eines Kragens ausgebildet ist und insbesondere mit Griffmulden o.dgl. die Handbetätigung erleichternden Merkmalen versehen ist. Durch Drehen des kragenförmigen Betätigungselements lässt sich das Schieberelement verdrehen. Dabei bewegt sich das Schieberelement längs einer Kurvenbahn.

Das Luftauslasselement weist bis auf die mindestens eine Lufteinlassöffnung und die Luftauslassöffnung keinerlei Öffnungen auf, die dem Eintritt von dem Innenraum zuzuführender Luft dienen. Bei dem Luftauslasselement handelt es sich vorzugsweise um einen rotationssymmetrischen Körper, der vorzugsweise eine zylindrische oder eine konische Mantelwand aufweist. In der Mantelwand ist die mindestens eine Lufteinlassöffnung angeordnet. Vorzugsweise weist die Mantelwand bzw. das Luftauslasselement zwei diametral gegenüberliegende Lufteinlassöffnungen auf. In einer ersten Drehposition des Betätigungselements verschließt ein Schieberbereich des Schieberelements die mindestens eine Lufteinlassöffnung, während das Schieberelement in einer zweiten Drehstellung diese Lufteinlassöffnung im wesentlichen vollständig freigibt. Der Schieberbereich des Schieberelements und die Wandung des Luftauslasselements zu zumindest einer Seite der Lufteinlassöffnung sind parallel zueinander angeordnet. Dieser Wandbereich des Luftauslasselements bzw. der Schieberbereich sind als Teile von rotationssymmetrischen konischen Wandungen ausgebildet.

Eine Besonderheit der Erfindung ist in der Ausbildung des Luftauslasselements als kegelförmiges Element mit mindestens einer sich über die Höhe der Kegelwandung erstreckenden Lufteinlassöffnung zu sehen. So ist es beispielsweise möglich, dass die Gesamtfläche sämtlicher derart gestalteter Lufteinlassöffnungen mehr als das 1 1/2-fache der Querschnittsfläche der Luftauslassöffnung beträgt. Damit ist also einzig und allein die Dimensionierung der Luftauslassöffnung entscheidend für den maximal möglichen Luftdurchsatz. Diesen maximal möglichen Luftdurchsatz beeinträchtigende Bauelemente sind bei der erfindungsgemäßen Luftauslassvorrichtung in dem Luftzuführungskanal im Bereich des Luftauslasselements also nicht mehr gegeben. Das Verschlusselement, nämlich das Schieberelement, ist im vollständig geöffneten Zustand der Lufteinlassöffnung durch einen Teil des Luftauslasselements verdeckt, beeinträchtigt also den Luftstrom nicht.

Neben den strömungstechnisch günstigen Eigenschaften (keine Strömungsumlenkung und keine Prallflächen durch das Schieberelement in geöffnetem Zustand der Lufteinlassöffnung bzw. Lufteinlassöffnungen) ist der im wesentlichen zweiteilige Aufbau der erfindungsgemäßen Luftauslassvorrichtung extrem einfach und übersichtlich und damit montagefreundlich sowie wartungsfreundlich und funktionszuverlässig.

Die erfindungsgemäße Luftauslassvorrichtung lässt sich entweder starr oder verschwenkbar (über ein Kugelkopfgelenk) anordnen.

Die Erfindung wird nachfolgend unter Bezugnahme auf die Zeichnung anhand eines Ausführungsbeispiels näher erläutert. Im einzelnen zeigen:
- Fig. 1: eine Seitenansicht der Luftauslassvorrichtung zur Belüftung eines Sitzplatzes in einem Fahrzeug, wie beispielsweise einem Flugzeug oder Bus, mit angedeutetem Deckenpaneel,
- Fig. 2: eine perspektivische und teilweise aufgebrochene Darstellung der Luftauslassvorrichtung zur Verdeutlichung ihres Innenlebens,
- Fig. 3: eine Ansicht der Luftauslassvorrichtung in Luftströmungsrichtung und
- Fig. 4: eine Ansicht der Luftauslassvorrichtung entgegengesetzt zur Strömungsrichtung.

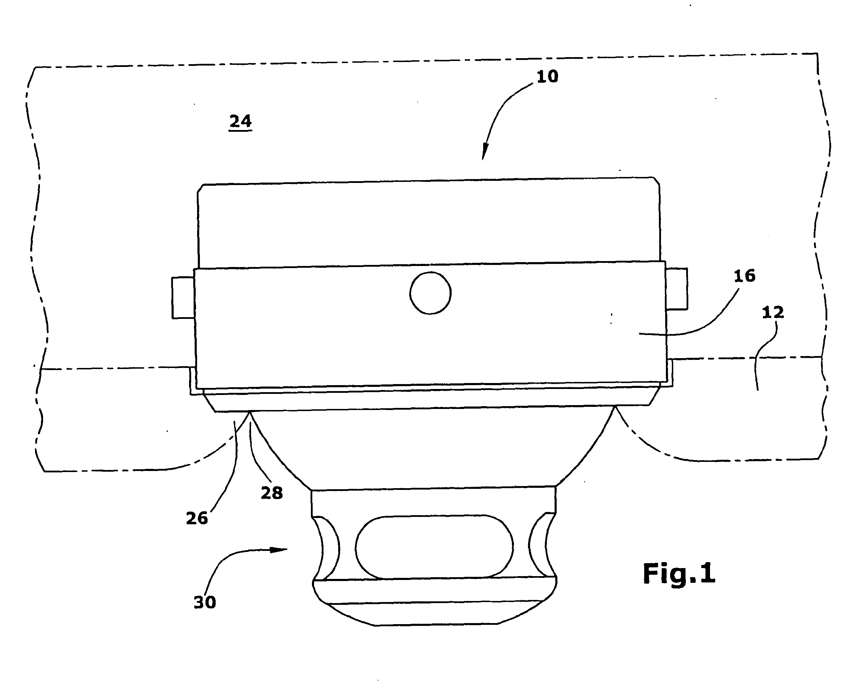

In den Fign. 1 bis 4 ist der Aufbau einer Luftauslassvorrichtung 10 sowie das Zusammenspiel der einzelnen Komponenten dieser Luftauslassvorrichtung 10 dargestellt. Gemäß Fig. 1 ist die Luftauslassvorrichtung 10 in der Deckenverkleidung 12 oberhalb eines Fahrgastsitzes in beispielsweise einem Flugzeug oder Bus angeordnet. Durch manuelle Betätigung der Luftauslassvorrichtung 10 lässt sich die Intensität und Richtung einer Luftströmung verändern.

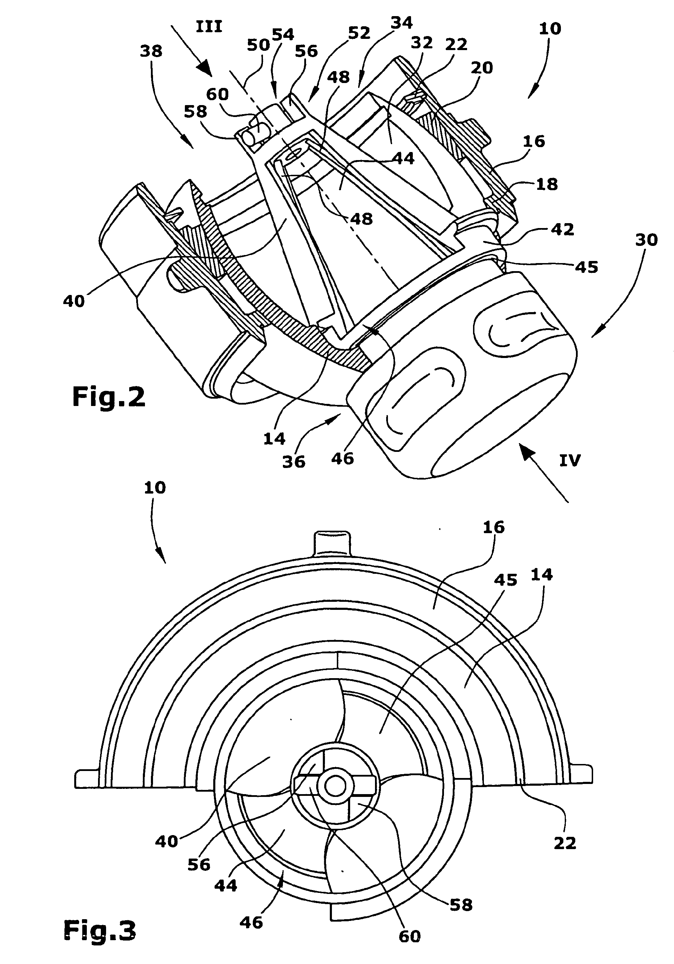

Die Luftauslassvorrichtung 10 weist ein kugelförmiges Halteelement 14 auf, das innerhalb eines Raumwinkelbereichs, der bezüglich seiner Größe konstruktiv bedingt ist, schwenkbar in einem zylindrischen Aufnahmeelement 16 gelagert ist. Dieses Aufnahmeelement 16 ist nach Art einer Hülse aufgebaut und weist an seinem auf der Deckenverkleidung 12 aufliegenden Ende einen Innenflansch 18 (siehe Fig. 2) auf, der an der sphärischen Außenseite des kugelförmigen Halteelements 14 anliegt. An der Innenseite des Aufnahmeelements 16 ist an diesem ein Lagerelement (siehe Fig. 2) angeordnet, dessen an dem Aufnahmeelement 16 anliegende Außenseite zylindrisch und dessen an dem Halteelement 14 anliegende Seite sphärisch konkav ausgebildet ist. Dieses Lagerelement 20 dient nicht nur der Lagerung des kugelförmigen Halteelements 14 sondern auch dem luftdichten Abschluss des Zwischenraums zwischen Aufnahmeelement 16 und Halteelement 14. Das Lagerelement 20 ist in seiner Einbauposition gemäß Fig. 2 durch einen gewellten Federring (nicht dargestellt) vorgespannt, der sich einerseits an dem Lagerelement 20 und andererseits an einem am Aufnahmeelement 16 gesicherten Sicherungsring 22 abstützt.

Wie in Fig. 1 gezeigt, befindet sich das Lagerelement 20 in einer mit Druckluft versorgten Kammer bzw. einem Schacht 24 und liegt an seinem mit dem Innenflansch 18 versehenen Ende dichtend an dem Rand 26 einer Öffnung 28 der Deckenverkleidung 12 an. Aus der Öffnung 28 ragt somit ein Teil des kugelförmigen Halteelements 14 sowie ein Betätigungselement 30 zur Einstellung der Intensität und Richtung der Luftströmung heraus.

Gemäß Fig. 2 weist das Halteelement 14 einen zylinderförmigen Durchlass 32 auf, dessen eines Ende 34 in den Schacht 24 hineinragt und an dessen anderen Ende 36 das Betätigungselement 30 angeordnet ist. Im Innern des Durchlasses 32 befindet sich ein Luftauslasselement 38, das im wesentlichen eine konusförmige Wandung 40 mit einem zylindrischen Kragen 42 aufweist. Der zylindrische Kragen 42 befindet sich an dem Ende 36 des Halteelements 14, an dem sich auch das Betätigungselement 30 befindet. Damit ragt das Luftauslasselement 38 kegelförmig und entgegengesetzt zur Strömungsrichtung in den Durchlass 32 hinein.

Die kegelförmige Wandung 40 des Luftauslasselements 38 ist mit zwei trapezförmigen Lufteinlassöffnungen 44 versehen, die diametral gegenüberliegend angeordnet sind. Die Fläche jeder Lufteinlassöffnung 44 beträgt im wesentlichen ein Vierteil der kegelförmigen Gesamtwandung 40. Die Grundfläche der Konusform des Luftauslasselements 38 bildet eine Luftauslassöffnung 45.

Im Innern des Luftauslasselements 38 ist ein Schieberelement 46 angeordnet, das zwei Schieberbereiche 48 aufweist, die bei Rotation des ebenfalls im wesentlichen kegelförmigen Schieberelements 46 in Überdeckung mit den Lufteinlassöffnungen 44 gebracht werden können. Das Schieberelement 46 ist mit dem kragenförmigen Betätigungselement 30 vorzugsweise integral ausgebildet, lässt sich also um die Längsachse 50 des Luftauslasselements 38 in diesem verdrehen.

Durch die kegelförmige bzw. kegelstumpfförmige Ausbildung sowohl des Luftauslasselements 38 als auch des Schieberelements 46 wird unter Berücksichtung von vorzusehenden Fertigungstoleranzen zuverlässig erreicht, dass die Schieberbereiche 48 die Lufteinlassöffnungen 44 zuverlässig dicht verschließen. Denn dadurch, dass die beiden konischen Element axial zusammengebracht werden, kommt es immer zu einer flächigen und damit luftdichten Anlage der Schieberbereiche 48 mit den noch verbleibenden Bereichen der kegelförmigen Wandung 40 des Luftauslasselements 38.

An ihren verjüngten Enden 52 bzw. 54 lassen sich die beiden Elemente (Luftauslasselement 38 und Schieberelement 46) miteinander verbinden. In diesem Bereich kann auch durch das Vorsehen von Anschlagelementen 56,58 an dem Luftauslasselement 38 und einem korrespondierenden Anschlagelement 60 an dem Schieberelement 46 der maximal zulässige Verdrehbereich des Betätigungselements 30 zum vollständigen Öffnen der Lufteinlassöffnungen 44 und zum vollständigen Verschließen der Lufteinlassöffnungen 44 festlegen.

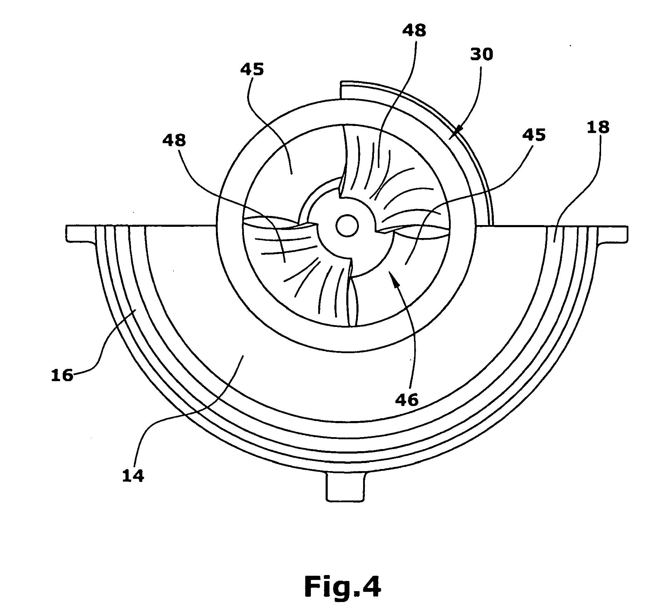

Zur Verdeutlichung des zuvor anhand der Fig. 2 beschriebenen inneren Aufbaus der Luftauslassvorrichtung 10 sind in den Fign. 3 und 4 weitere Ansichten der Luftauslassvorrichtung 10 gezeigt.

## Patentansprüche

1. Luftauslassvorrichtung für den Innenraum eines Fahrzeuges, insbesondere zur Anordnung oberhalb eines Sitzplatzes eines Fahrzeuges wie z.B. Flugzeug, Bus o.dgl., mit
- einem Luftauslasselement (38), das mindestens eine Lufteinlassöffnung (44) und eine Luftauslassöffnung (45) aufweist,
- einem Schieberelement (46) zum Verschließen und Freigeben der mindestens einen Lufteinlassöffnung (44) und
- einem an der Luftauslassöffnung (45) angeordneten, einen Kragen aufweisenden Betätigungselement (30) zum Bewegen des Schieberelements (46), wobei
- das Betätigungselement (30) um eine Längsachse (50) des Kragens drehbar gelagert und das Schieberelement (46) bei Drehung des Betätigungselements (30) zum Verschließen und Freigeben längs einer Kurvenbahn bewegbar ist und
- wobei das Luftauslasselement (38) rotationssymmetrisch ist sowie einen Mantel (40) aufweist und die mindestens eine Lufteinlassöffnung (44) in dem Mantel (40) ausgebildet ist,
**dadurch gekennzeichnet, dass**
- dass der Mantel (40) kegelförmig ist.

2. Luftauslassvorrichtung nach Anspruch 1, **dadurch gekennzeichnet, dass** das Luftauslasselement (38) zwei diametral gegenüberliegende Lufteinlassöffnungen (44) aufweist und dass das Schieberelement (46) zwei den beiden Lufteinlassöffnungen (44) jeweils zugeordnete Schieberbereiche (48) aufweist.

3. Luftauslassvorrichtung nach Anspruch 2, **dadurch gekennzeichnet, dass** das Schieberelement (46) und das Luftauslasselement (38) im wesentlichen gleichförmig ausgebildet sind.

4. Luftauslassvorrichtung nach Anspruch 3, **dadurch gekennzeichnet, dass** das Schieberelement (46) und das Luftauslasselement (38) jeweils zwei diametral gegenüberliegende Öffnungen (44) aufweisen, die sich über etwa 90° in Umfangsrichtung und/oder über im wesentlichen die gesamte axiale Länge des Mantels (40) erstrecken.

5. Luftauslassvorrichtung nach einem der Ansprüche 1 bis 4, **dadurch gekennzeichnet, dass** das Schieberelement (46) an dem Luftauslasselement (38) gelagert ist.

6. Luftauslassvorrichtung nach einem der Ansprüche 1 bis 5, **dadurch gekennzeichnet, dass** das Luftauslasselement (38) von einem einen Teil eines Luftauslasskanal bildenden, eine sphärische Außenfläche aufweisenden Halteelement (14) gehalten ist, das schwenkbar in einem Aufnahmeelement (16) gelagert ist.

## Claims

1. Air outlet device for the interior of a vehicle, particularly for being arranged above a seat of a vehicle such as, e.g., an airplane, a bus or the like, comprising
- an air outlet element (38) comprising two diametrically opposed air inlet openings (44) and one air outlet opening (45),
- a slide element (46) for blocking and unblocking the at least one air inlet opening (44), and
- an actuating element (30) for moving the slide element (46), which is arranged at the air outlet opening (45) and comprises a collar, wherein
- the actuating element (30) is supported so as to be rotatable about a longitudinal axis (50) of the collar, and the slide element (46) is movable along a curved path for blocking and unblocking when the actuating element (30) is rotated, and
- the air outlet element (38) being rotationally symmetric and comprising a shell (40), and the at least one air inlet openings (44) being formed in the shell (40),
**characterized in that**
- the shell (40) is conical.

2. Air outlet device according to claim 1, **characterized in that** the air outlet element (38) comprises two diametrically opposed air inlet openings (44) and that the slide element (46) comprises two slide portions (48) respectively allocated to the two air inlet openings (44).

3. Air outlet device according to claim 2, **characterized in that** the slide element (46) and the air outlet element (38) are substantially configured in a uniform manner.

4. Air outlet device according to claim 3, **characterized in that** each of the slide element (46) and the air outlet element (38) comprises two diametrically opposed openings (44) extending over about 90° in circumferential direction and/or over substantially the entire axial length of the shell (40).

5. Air outlet device according to one of claims 1 to 4, **characterized in that** the slide element (46) is supported at the air outlet element (38).

6. Air outlet device according to one of claims 1 to 5, **characterized in that** the air outlet element (38) is retained by a retaining element (14) forming a part of an air outlet duct and comprising a spherical outer surface and being pivotably supported in a receiving element (16).

## Revendications

1. Dispositif de sortie d'air pour habitacles de véhicules, en particulier à disposer au-dessus d'un siège d'un véhicule tel que, par exemple, un avion, un bus ou autre, comprenant
- un élément de sortie d'air (38) qui présente au moins une ouverture d'entrée d'air (44) et une ouverture de sortie d'air (45),
- un élément coulissant (46) pour fermer et ouvrir la ou les ouvertures d'entrée d'air (44) et
- un élément d'actionnement (30) présentant un collerette, disposé sur l'ouverture de sortie d'air (45), pour mouvoir l'élément coulissant (46),
- l'élément d'actionnement (30) pivotant autour d'un axe longitudinal (50) de la collerette et l'élément coulissant (46) étant mobile le long d'un chemin courbe pour fermer et ouvrir lors de la rotation de l'élément d'actionnement (30) et
- l'élément de sortie d'air (38) étant symétrique en rotation et présentant une enveloppe (40), la ou les ouvertures d'entrée d'air (44) étant formées dans l'enveloppe (40),
**caractérisé en ce que**
- l'enveloppe (40) est de forme conique.

2. Dispositif de sortie d'air selon la revendication 1, **caractérisé en ce que** l'élément de sortie d'air (38) présente deux ouvertures d'entrée d'air (44) diamétralement opposées et que l'élément coulissant (46) présente deux régions de coulissement (48) associées respectivement aux deux ouvertures d'entrée d'air (44).

3. Dispositif de sortie d'air selon la revendication 2, **caractérisé en ce que** l'élément coulissant (46) et l'élément de sortie d'air (38) présentent sensiblement la même forme.

4. Dispositif de sortie d'air selon la revendication 3, **caractérisé en ce que** l'élément coulissant (46) et l'élément de sortie d'air (38) présentent chacun deux ouvertures diamétralement opposées (44) qui s'étendent sur environ 90° dans la direction périphérique et/ou sur sensiblement la totalité de la longueur axiale de l'enveloppe (40).

5. Dispositif de sortie d'air selon une des revendications 1 à 4, **caractérisé en ce que** l'élément coulissant (46) est monté sur l'élément de sortie d'air (38).

6. Dispositif de sortie d'air selon une des revendications 1 à 5, **caractérisé en ce que** l'élément de sortie d'air (38) est maintenu par un élément de maintien (14) présentant une face extérieure sphérique, formant une partie d'un canal de sortie d'air, qui est monté de manière pivotante dans un réceptacle (16).
